(19) Europäisches Patentamt
European Patent Office
Office européen des brevets

(11) Veröffentlichungsnummer: 0 369 248 A2

(12) # EUROPÄISCHE PATENTANMELDUNG

(21) Anmeldenummer: 89120320.0

(51) Int. Cl.$^5$: C08G 65/40

(22) Anmeldetag: 03.11.89

(30) Priorität: 15.11.88 DE 3838644

(43) Veröffentlichungstag der Anmeldung: 23.05.90 Patentblatt 90/21

(84) Benannte Vertragsstaaten: DE FR GB IT

(71) Anmelder: BAYER AG

D-5090 Leverkusen 1 Bayerwerk(DE)

(72) Erfinder: Kricheldorf, Hans-Rytger, Prof. Dr.
Menzelstrasse 10
D-2000 Hamburg 52(DE)
Erfinder: Delius, Ulrich
Föhrenstieg 2
D-2070 Ahrensburg(DE)
Erfinder: Wehrmann, Rolf, Dr.
Buschstrasse 163
D-4150 Krefeld(DE)

(54) **Aromatische Polyether mit seitenständigen Ketogruppen.**

(57) Die Erfindung betrifft neue aromatische Polyether, vorzugsweise Polyphenylenether (PPO) mit seitenständigen Ketogruppen und deren Verwendung.

EP 0 369 248 A2

## Aromatische Polyether mit seitenständigen Ketogruppen

Die Erfindung betrifft neue aromatische Polyether, vorzugsweise Polyphenylenether mit seitenständigen Ketogruppen und deren Verwendung.

Aromatische Polyether, z.B. Polyphenylenoxid (PPO), Polyethersulfone, Polyetherketone, Polyetheramide sind hochwärmeformbeständige Polymere. Sie sind wenig oxidationsempfindlich und schwer entflammbar. Teilkristalline Polyarylenether, z.B. Polyetheretherketone (PEEK). weisen zudem eine große Chemikalien- und Lösemittelresistenz auf.

Diese Polymere können bekanntlich durch nukleophile Substitutionsreaktionen in dipolar-aprotischen Lösemitteln hergestellt werden. PPO durch solche Reaktionen herzustellen ist bislang noch nicht bekannt.

Die durch nukleophile Substitutionsreaktionen hergestellten Polymere haben keine funktionelle (reaktionsfähige) Gruppe mehr. Sie können für bestimmte technische Anwendungen, z.B. als Membranmaterialien für die Gastrennung, kaum eingesetzt werden.

Es wurden neue aromatische Polyether, vorzugsweise mit seitenständigen Ketogruppen,gefunden, die durch nukleophile Substitutionsreaktionen zugänglich sind.

Gegenstand der Erfindung sind aromatische Polyether, vorzugsweise mit seitenständigen Ketogruppen der Formel (I)

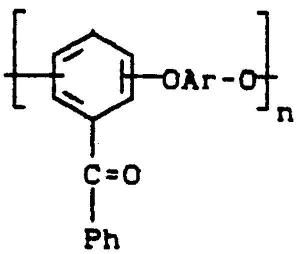

(I),

in welcher

Ar für einen gegebenenfalls mit $C_1$-$C_4$-Alkyl, $C_6$-$C_{14}$-Aryl, $C_7$-$C_{24}$-Aralkyl und -Alkaryl substituierten $C_6$-$C_{30}$-Arylrest steht,

Ph für gegebenenfalls mit -X-$C_1$-$C_4$-Alkyl, -X-$C_1$-$C_{14}$-Aryl steht, wobei X für Sauerstoff (O) oder Schwefel (S) steht und

n für eine ganze Zahl von 3 bis 250 steht.

Vorzugsweise steht Ar für einen Rest der Formel (Ia)

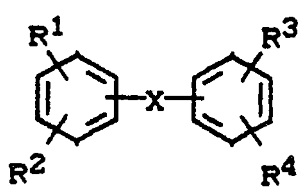

(Ia),

in welcher

X eine chemische Bindung, ein Sauerstoffatom, ein Schwefelatom, eine Sulfongruppe, eine Carbonyl-Gruppe oder ein $C_3$-$C_{20}$-Alkylenrest, bevorzugt Isopropyliden, bedeutet,

$R^1$ bis $R^4$ unabhängig voneinander für Wasserstoff,

$C_1$-$C_{20}$-Alkyl, bevorzugt Wasserstoff, Methyl,

$C_6$-$C_{14}$-Aryl oder Halogen wie Cl, Br steht.

Der Arylrest Ar und Phenylrest Ph kann mit funktionellen Gruppen z.B. -$NR_2$ (R = H, $C_1$-$C_4$-Alkyl) substituiert sein. Diese Reste sind bevorzugt elektronenschiebende Reste.

Der Index n in Formel (I) steht für eine ganze Zahl von 3 bis 250, bevorzugt 5 bis 200, besonders bevorzugt 5 bis 150.

Gegenstand der Erfindung ist ein Verfahren (A) zur Herstellung der aromatischen Polyether, vorzugsweise der Formel (I)

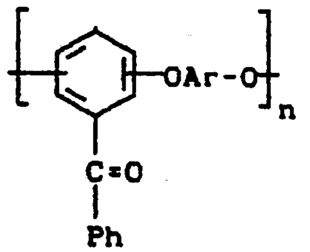

(I),

in welcher

Ar für einen gegebenenfalls mit $C_1$-$C_4$-Alkyl, $C_6$-$C_{14}$-Aryl, $C_7$-$C_{24}$-Aralkyl und -Alkaryl substituierten $C_6$-$C_{30}$-Arylrest steht,

Ph für gegebenenfalls mit -X-$C_1$-$C_4$-Alkyl, -X-$C_1$-$C_{14}$-Aryl steht, wobei X für Sauerstoff (O) oder Schwefel (S) steht und

n für eine ganze Zahl von 3 bis 250 steht,

dadurch gekennzeichnet, daß in an sich bekannter Weise Dihalogenbenzophenone der Formel (II)

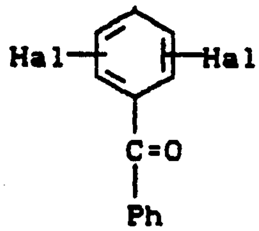

(II),

in welcher

Hal für Halogen wie Fluor (F), Chlor (Cl), vorzugsweise Fluor steht,

Ph die bei Formel (I) angegebene Bedeutung hat,

mit

Bistrialkylsilylethern der Formel (III)

$R^5{}_3$Si-O-Ar-O-Si$R^5{}_3$ (III),

in welcher

$R^5$ für einen gegebenenfalls verzweigten $C_1$-$C_6$-Alkylrest, vorzugsweise Methyl-, Ethyl-, Propylrest steht, und

Ar die bei Formel (I) angegebene Bedeutung hat,

miteinander umgesetzt werden.

Die Trimethylsilylether der Formel (III) sind bekannt und können z.B. auf bekanntem Weg durch Umsetzung von Bisphenolen mit Hexamethyldisilazan hergestellt und z.B. durch fraktionierte Destillation im Vakuum oder Kristallisation isoliert werden.

Geeignete Diole zur Herstellung der Silylether sind z.B. Hydrochinon, Methylhydrochinon, 4,4′-Dihydroxybiphenyl, Bis-(4-hydroxyphenyl)-sulfon, 4,4′-Dihydroxydiphenylether, Bis-(4-hydroyphenyl)-methan, 2,2-Bis-(4-hydroxyphenyl)-propan (Bisphenol A), 1,6-, 1,7-, 2,6- und 2,7-Naphthalindiol, Phenophthalein u.s.w.

Beispiele für die Dihalogenverbindungen der Formel (II) sind 2,6-Difluorbenzophenon, 2,6-Difluor-4′-methoxybenzophenon, 2,6-Difluor-4′-methyl-benzophenon, 2,6-Difluor-4′-(4-acetylyl-phenoxy)-benzophenon, 2,6-Difluor-4′-methylmercapto-benzophenon u.s.w. Sie sind bekannt und können z.B. nach bekannten Methoden hergestellt werden.

Die Kondensationsreaktionen zur Herstellung der neuen Polyarylether können durch Salze, z.B. Alkalisalze wie Alkalihalogenide, z.B. CSF, katalysiert werden.

Es eignen sich vorzugsweise Salze als Katalysatoren, die in ein weiches Kation und hartes Anion im verwendeten Lösungsmittel dissozieren.

Pro Mol Dihalogenverbindung der Formel (II) werden etwa 0,01 bis 0,1 mol Katalysator eingesetzt.

Das erfindungsgemäße Verfahren kann mit und ohne Verdünnungsmittel durchgeführt werden. Vorzugsweise wird es ohne Verdünnungsmittel ausgeführt.

Die Umsetzung wird bei Temperaturen von 180 bis 220° C durchgeführt. Während des Aufkondensierens wird die Temperatur sukzessive gesteigert. Die Endtemperaturen liegen bei 280 bis 320° C. Gegen

Ende der Reaktion wird Vakuum (bis ca. $10^{-3}$ bar) angelegt. Als Nebenprodukt fällt leicht flüchtiges Trialkylsilylhalogenid an.

Das Verfahren kann in einer besonderen Ausführungsform so durchgeführt werden, daß z.B. ein 2,4- oder 2,6-Dihalobenzophenon mit einem anderen aktivierten Dihaloaromaten im Gemisch zur Kondensation eingesetzt wird. Weiterhin können z.B. Dihalobenzophenone mit Gemischen von mehreren silylierten Bisphenolen polykondensiert werden.

Gegenstand der Erfindung ist ein Verfahren (B) zur Herstellung der aromatischen Polyether der Formel (I)

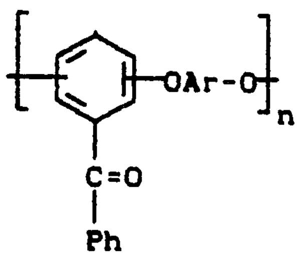

(I),

in welcher
Ar für einen gegebenenfalls mit $C_1$-$C_4$-Alkyl, $C_6$-$C_{14}$-Aryl, $C_7$-$C_{24}$-Aralkyl und -Alkaryl substituierten $C_6$-$C_{30}$-Arylrest steht,
Ph für gegebenenfalls mit -X-$C_1$-$C_4$-Alkyl, -X-$C_1$-$C_{14}$-Aryl steht, wobei X für Sauerstoff (O) oder Schwefel (S) steht und
n für eine ganze Zahl von 3 bis 250 steht,
dadurch gekennzeichnet, daß in an sich bekannter Weise Dihalogenbenzophenone der Formel (II)

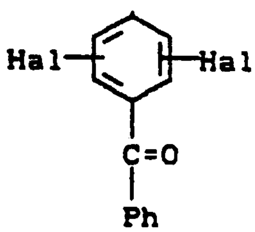

(II),

in welcher
Hal für Halogen wie Fluor (F), Chlor (Cl), vorzugsweise Fluor steht,
Ph die bei Formel (I) angegebene Bedeutung hat,
mit aromatische Dihydroxiverbindungen der Formel (IV)
HO-Ar-OH (IV),
in welcher
Ar die bei Formel (I) angegebene Bedeutung hat,
in Gegenwart von 1 bis 1,3 Äquivalenten basischen Katalysatoren, bezogen auf Dihydroxiverbindungen der Formel (IV), umgesetzt werden und das Mol-Verhältnis eingesetzter Dihalogenbenzophenone der Formel (II) zu eingesetzten Dihydroxiverbindungen der Formel (IV) 0,98:1 bis 1,02:1 beträgt, bezogen auf die Menge an eingesetzten Dihydroxiverbindungen, und daß die Umsetzung in einem dipolar-aprotischen Lösemittel der Formeln (V) und/oder (VI)

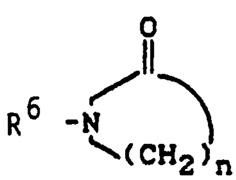

(V),

$R^7$-Y-$R^8$ (VI),
in welchen
$R^6$ - $R^8$ unabhängig voneinander $C_1$-$C_{20}$-Alkyl oder Cycloalkyl, bevorzugt Methyl, $C_6$-$C_{20}$-Aryl, bevorzugt Phenyl, bedeuten,
Y eine Sulfoxid- oder Sulfongruppe bedeutet und
n für die Zahl 3, 4 oder 5 steht,
durchgeführt wird, wobei das Verhältnis Lösemittel zu Feststoff 10 : 1 bis 1 : 1 beträgt und die Reaktionstemperatur 100 bis 350° C, bevorzugt 150 bis 250° C, beträgt.

Die Umsetzungsdauer beträgt im allgemeinen eine bis 50 Stunden, vorzugsweise 2 bis 20 Stunden.

Beispiele für die Dihalobenzophenone der Formel (II) sind 2,6-Difluorbenzophenon, 2,6-Dichlorbenzophenon, 2,4-Difluorbenzophenon, 2,4-Dichlorbenzophenon usw.

Beispiele für Dihydroxiverbindungen der Formel (IV) sind Hydrochinon, Methylhydrochinon, 4,4′-Dihydroxydiphenyl, 4,4′-Dihydroxydiphenylether, Bis-(4-hydroxyphenyl)methan, 2,2-Bis-(4-hydroxyphenyl)-propan (Bisphenol A), 1,6-, 1,7-, 2,6-, 2,7-Naphthalindiol usw.

Beispiele für Lösemitel der Formel (V) sind N-Methylpyrrolidon, N-Methylcaprolactam usw.

Beispiele für Lösemittel der Formel (VI) sind Dimethylsulfoxid, Diphenylsulfon, Sulfolan usw.

Beispiele für basische Katalysatoren sind basische (Erd)alkalisalze wie Natriumhydroxid, Kaliumhydroxid, Natriumethanolat, Kaliumcarbonat, Kaliumhydrogencarbonat usw.

Vor der Umsetzung (Kondensation) kann das Reaktionsgemisch vorzugsweise azeotrop entwässert werden. Dazu wird z.B. ein übliches Schleppmittels wie Toluol, Mesitylen, Chlorbenzol, Dichlorbenzol usw. zugesetzt. Die Umsetzung wird bevorzugt unter Inertgas (z.B. Stickstoff, Argon) durchgeführt. Mit fortschreitender Kondensation wird die Reaktionstemperatur sukzessive erhöht, vorzugsweise auf 150 bis 250° C, und dabei Wasser und Schleppmittel aus dem Umsetzungsgemisch entfernt. Ein allmählicher Viskositätsanstieg kann beobachtet werden.

Anschließend wird durch Fällung, z.B. aus Alkoholen oder Alkohol/Wasser-Gemischen, z.B. Methanol, Ethanol oder Isopropanol das Polymere isoliert.

Die erfindungsgemäßen aromatischen Polyether zeichnen sich u.a dadurch aus, daß ihre physikalisch-chemischen Eigenschaften durch Reaktionen an den seitenständigen substituierten Phenylresten Ph chemisch variiert werden können. Beispielsweise ist die Oxidation einer Mercaptogruppe zum Sulfon leicht möglich.

Die neuen aromatischen Polyether sind hydrophiler als PPO. Sie eignen sich z.B. gut zur Herstellung von Membranen. Diese Membrane können u.a zur Gastrennung usw. eingesetzt werden.

Beispiel 1 (Verfahren A)

In einem 100 ml-Zweihalskolben mit Rückflußkühler und Rührer werden 10,91 g (50 mmol) 2,6-Difluorbenzophenon, 12,72 g (50 mmol) Hydrochinon-bistrimethylsilylether und 100 mg Cäsiumfluorid in einer Stickstoffatmosphäre vorgelegt. Anschließend wird je zwei Stunden auf 200 bzw. 250° C und eine halbe Stunde auf 280° C erhitzt. Während der letzten halben Stunde wird Vakuum angelegt. Das abgekühlte Reaktionsprodukt wird in einer Mischung von Trifluoressigsäure und der vierfachen Menge (Volumen) an Dichlormethan gelöst, in Methanol ausgefällt, durch Filtration isoliert und bei 120° C im Wasserstrahlvakuum getrocknet.
Ausbeute: 74 %
CHN-Analyse:
C 78,50 % (ber. 79,1)
H 4,31 % (ber. 4,19)
Tg.: 132° C

Beispiel 2 (Verfahren B)

In einem im Vakuum ausgeheizten und mit Stickstoff belüfteten 500-ml-Dreihalskolben mit Rührmotor, Innenthermometer und Wasserabscheider werden 9,31 g (50 mmol) 4,4′-Dihydroxydiphenyl, 10,91 g (50 mmol) 2,6-Difluorbenzophenon und 9 g Kaliumcarbonat in 100 ml wasserfreiem N-Methylcaprolactam und 50 ml wasserfreiem Toluol vorgelegt. Die Lösung wird etwa 3 Stunden lang entwässert. Anschließend wird schrittweise soviel Toluol abgenommen, daß die Innentemperatur auf 180° C ansteigt. Bei dieser Temperatur wird 8 Stunden gerührt. Dabei ist ein allmählicher Viskositätsanstieg zu beobachten. Nach weiterer

Toluolabnahme wird die Temperatur auf 190 bis 195 °C erhöht und eine Stunde nachgerührt. Die Lösung wird mit etwa 200 ml NMC verdünnt und heiß filtriert, mit verdünnter Essigsäure neutralisiert und in der zehnfachen Menge eines Gemisches aus Methanol/Wasser (1 : 1) ausgefällt. Das Polymere wird eine Stunde mit Wasser gekocht, abgesaugt, in Methylenchlorid gelöst, aus Methanol gefällt und im Wasserstrahlvakuum bei 80 °C getrocknet.
Ausbeute: 56 %
Tg: 163 °C

Beispiel 3

Modifizierung eines erfindungsgemäßen aromatischen Polyethers durch chemische Umsetzung an Substituenten des Phenylrestes Ph.

3,62 g (8 mmol) des Polyarylenethers aus BPA-bistrimethylsilylether und 2,6-Difluor-4′-methylmercaptobenzophenon werden in einer Mischung aus 200 ml Dioxan, 25 ml Eisessig und 25 ml Acetanhydrid gelöst. Bei 0 °C werden unter Rühren 2,5 ml 30%iges Wasserstoffperoxid (ca. 25 mmol) vorsichtig zugegeben. Man läßt die Reaktionslösung 24 Stunden bei Raumtemperatur stehen und erhitzt anschließend eine Stunde unter Rückfluß. Die erkaltete Lösung wird auf das 1,2fache eines Methanol/Wasser-Gemisches (3 : 1) gegossen. Das ausgefallene Produkt wird abgesaugt und bei 70 °C im Wasserstrahlvakuum getrocknet.
Ausbeite: 3,6 g = 93 %.

Die Vollständigkeit der Reaktion kann $^1$H-NMR-spektroskopisch anhand der Verschiebung des Resonanzsignals der am Schwefelatom gebundenen Methylgruppe festgestellt werden. Das ursprüngliche Signal bei 2,47 ppm ist nach der Oxidation vollständig verschwunden; ein neuer Peak ist bei 3,05 ppm zu sehen.

Tabelle 1

Reaktionsbedingungen und Ausbeuten von Polyethern, hergestellt aus 2,6-Difluoro-benzophenon und verschiedenen silylierten Bisphenolen

| Formel | Silyl Bisphenol | Temp. (°C) | Zeit (min) | Ausb. (%) | $\eta$inh[a)] (dl/g) | Summenformel (Molgew.) | Elementar-Analyse | | |
|---|---|---|---|---|---|---|---|---|---|
| | | | | | | | | C | H |
| 1a | Hydroquinon | 200,250,280,280 | 120,120,30,30 i. vac. | 74 | 0,27 | $C_{19}H_{12}O_3$ (288,31) | Calcd. | 79,15 | 4,20 |
| | | | | | | | Found | 78,56 | 4,18 |
| 1b | Methylhydroquinon | 180,200,250,280,280 | 90,60,30,30 i. vac. | 79 | 0,79 | $C_{20}H_{14}O_{13}$ (302,34) | Calcd. | 79,45 | 4,68 |
| | | | | | | | Found | 79,01 | 4,66 |
| 1c | Phenylhydroquinon | 180,200,250,300,300 | 60,100,75,30,30 i. vac. | 89 | 0,51 | $C_{25}H_{16}O_3$ (364,41) | Calcd. | 82,39 | 4,43 |
| | | | | | | | Found | 82,16 | 4,45 |
| 1d | 4,4′-Dihydroxybiphenyl | 220,250,280,280 | 60,90,45,30 i. vac. | 90 | 0,16 | $C_{25}H_{16}O_3$ (364,41) | Calcd. | 82,39 | 4,43 |
| | | | | | | | Found | 81,92 | 4,55 |
| 1e | Bisphenol-A | 180,200,280,280 | 60,60,30,30 i. vac. | 97 | 0,27 | $C_{28}H_{22}O_3$ (436,48) | Cacld. | 82,73 | 5,46 |
| | | | | | | | Found | 82,05 | 5,54 |
| 1f | Phenolphthalein | 200,250,280,280 | 90,90,30,30 i. vac. | 93 | 0,32 | $C_{33}H_{20}O_5$ (496,53) | Calcd. | 79,82 | 4,07 |
| | | | | | | | Found | 79,41 | 4,19 |

a) gemessen mit c = 2 g/l bei 20°C in Dichloromethan/Trifluoressigsäure (4 : 1 Volumen)

**Tabelle 2**: Reaktionsbedingungen und Ausbeuten von Poly(ethern), hergestellt mit substituierten 2,6-Difluorbenzophenonen und silylierten Bisphenolen

Nr: Ia: 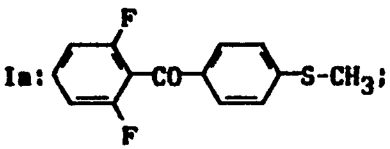; Ib: 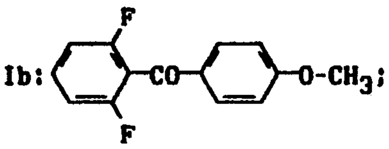; IIa: 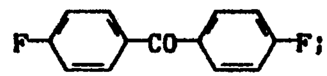; IIb: 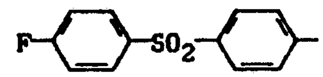

| Silyl. Bisphenol | Difluoraromat(en) Nr. | Temp. (°C) | Zeit (min) | Ausb. (%) | $\eta_{inh}$ [a] (dl/g) | Summenformel (Molgew.) | Elementar-Analyse | C | H | S |
|---|---|---|---|---|---|---|---|---|---|---|
| Bisphenol-A | Ia | 200,220,<br>280,280,<br>280 | 15,30,60,<br>60,30<br>i. vac. | 82 | 0,28 | $C_{29}H_{24}O_3S$<br>(452,59) | ber.:<br>get.: | 76,95<br>76,89 | 5,36<br>5,48 | 7,08<br>6,92 |
| Bisphenol-A | Ib | 180,200,<br>240,300,<br>300 | 60,20,20,<br>10,10,30<br>i. vac. | 98 | 0,21 | $C_{29}H_{24}O_4$<br>(436,53) | ber.:<br>get.: | 79,79<br>77,25 | 5,55<br>5,52 | -<br>- |
| Hydrochinon | Ib + IIa[b] | 200,220,<br>280,300,<br>320,320 | 15,90,30<br>30,30,30<br>i. vac. | 78 | 0,34 | $C_{19,5}H_{13}O_{3,5}$<br>(303,33) | ber.:<br>get.: | 77,21<br>75,87 | 4,43<br>4,31 | -<br>- |
| Hydrochinon | Ia + IIb[b] | 200,220,<br>250,250,<br>280,280 | 30,120,30,<br>30,30,30<br>i. vac. | 88 | 0,36 | $C_{19}H_{13}O_{3,5}S$<br>(329,38) | ber.:<br>get.: | 69,28<br>67,62 | 3,99<br>3,97 | 9,73<br>- |
| Bisphenol-A | Ib + IIa[b] | 220,250,<br>280,320,<br>320 | 90,30,30,<br>30,30<br>i. vac. | 87 | 0,84 | $C_{28}H_{22}O_{3,5}$<br>(421,52) | ber.:<br>get.: | 81,20<br>80,76 | 5,51<br>5,53 | -<br>- |

a) gemessen mit c = 2 g/l bei 20°C in Dichloromethan/Trifluoressigsäure (4 : 1 Volumen)
b) Molverhältnis 1 : 1

**Ansprüche**

1. Aromatische Polyether, vorzugsweise mit seitenständigen Ketogruppen der Formel (I)

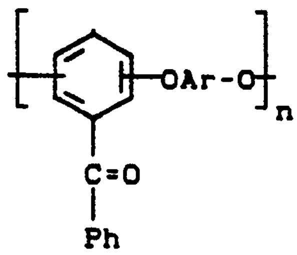

(I),

in welcher
Ar für einen gegebenenfalls mit $C_1$-$C_4$-Alkyl, $C_6$-$C_{14}$-Aryl, $C_7$-$C_{24}$-Aralkyl und -Alkaryl substituierten $C_6$-$C_{30}$-Arylrest steht,
Ph für gegebenenfalls mit -X-$C_1$-$C_4$-Alkyl, -X-$C_1$-$C_{14}$-Aryl steht, wobei X für Sauerstoff (O) oder Schwefel (S) steht und
n für eine ganze Zahl von 3 bis 250 steht.

2. Aromatische Polyether nach Anspruch 1, dadurch gekennzeichnet, daß Ar für einen Rest der Formel (Ia)

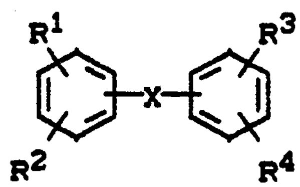

(Ia),

in welcher
X eine chemische Bindung, ein Sauerstoffatom, ein Schwefelatom, eine Sulfongruppe , eine Carbonylgruppe oder ein $C_3$-$C_{20}$-Alkylenrest, bevorzugt Isopropyliden, bedeutet,
$R^1$ bis $R^4$ unabhängig voneinander für Wasserstoff, $C_1$-$C_{20}$-Alkyl, Methyl, $C_6$-$C_{14}$-Aryl oder Halogen wie Cl, Br stehen,
steht.

3. Verfahren zur Herstellung der aromatischen Polyether, vorzugsweise der Formel (I)

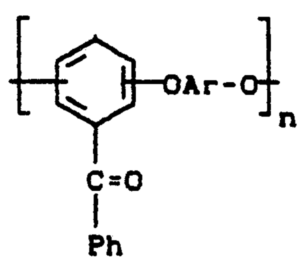

(I),

in welcher
Ar für einen gegebenenfalls mit $C_1$-$C_4$-Alkyl, $C_6$-$C_{14}$-Aryl, $C_7$-$C_{24}$-Aralkyl und -Alkaryl substituierten $C_6$-$C_{30}$-Arylrest steht,
Ph für gegebenenfalls mit -X-$C_1$-$C_4$-Alkyl, -X-$C_1$-$C_{14}$-Aryl steht, wobei X für Sauerstoff (O) oder Schwefel (S) steht und
n für eine ganze Zahl von 3 bis 250 steht,
dadurch gekennzeichnet, daß in an sich bekannter Weise Dihalogenbenzophenone der Formel (II)

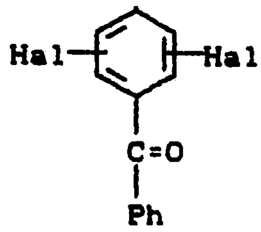

(II),

in welcher
Hal für Halogen wie Fluor (F), Chlor (Cl), vorzugsweise Fluor steht,
Ph die bei Formel (I) angegebene Bedeutung hat,
mit
Bistrialkylsilylethern der Formel (III)
$R^5{}_3Si\text{-}O\text{-}Ar\text{-}O\text{-}SiR^5{}_3$ (III),
in welcher
$R^5$ für einen gegebenenfalls verzweigten $C_1$-$C_6$-Alkylrest, vorzugsweise Methyl-, Ethyl-, Propylrest steht, und
Ar die bei Formel (I) angegebene Bedeutung hat,
miteinander umgesetzt werden.

4. Verfahren zur Herstellung der aromatischen Polyether der Formel (I)

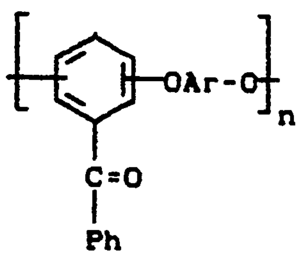

(I),

in welcher
Ar für einen gegebenenfalls mit $C_1$-$C_4$-Alkyl, $C_6$-$C_{14}$-Aryl, $C_7$-$C_{24}$-Aralkyl und -Alkaryl substituierten $C_6$-$C_{30}$-Arylrest steht,
Ph für gegebenenfalls mit -X-$C_1$-$C_4$-Alkyl, -X-$C_1$-$C_{14}$-Aryl steht, wobei X für Sauerstoff (O) oder Schwefel (S) steht und
n für eine ganze Zahl von 3 bis 250 steht,
dadurch gekennzeichnet, daß in an sich bekannter Weise Dihalogenbenzophenone der Formel (II)

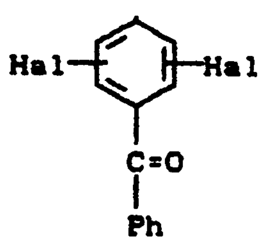

(II),

in welcher
Hal für Halogen wie Fluor (F), Chlor (Cl), vorzugsweise Fluor steht,
Ph die bei Formel (I) angegebene Bedeutung hat,
mit aromatische Dihydroxiverbindungen der Formel (IV)
HO-Ar-OH (IV),
in welcher
Ar die bei Formel (I) angegebene Bedeutung hat,
in Gegenwart von 1 bis 1,3 Äquivalenten basischen Katalysatoren, bezogen auf Dihydroxiverbindungen der Formel (IV), umgesetzt werden und das Mol-Verhältnis eingesetzter Dihalogenbenzophenone der Formel (II)

zu eingesetzten Dihydroxiverbindungen der Formel (IV) 0,98:1 bis 1,02:1 beträgt, bezogen auf die Menge an eingesetzten Dihydroxiverbindungen, und daß die Umsetzung in einem dipolar-aprotischen Lösemittel der Formeln (V) und/oder (VI)

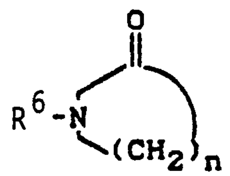

(V),

$R^7$-Y-$R^8$ (VI),

in welchen

$R^6$ - $R^8$ unabhängig voneinander $C_1$-$C_{20}$-Alkyl, Cycloalkyl, bevorzugt Methyl, $C_6$-$C_{20}$-Aryl, bevorzugt Phenyl, bedeuten,

Y eine Sulfoxid- oder Sulfongruppe bedeutet und

n für die Zahl 3, 4 oder 5 steht,

durchgeführt wird, wobei das Verhältnis Lösemittel zu Feststoff 10 : 1 bis 1 : 1 beträgt und die Reaktionstemperatur 100 bis 350 °C.

5. Verwendung der aromatischen Polyether mit seitenständigen Ketogruppen zur Herstellung von Membranen.